# EUROPEAN PATENT SPECIFICATION

(11) **EP 2 330 398 B1**
(45) Date of publication and mention of the grant of the patent: **13.11.2013**
(21) Application number: 09014912.1
(22) Date of filing: 01.12.2009
(51) Int. Cl.: G01M 13/02, G01N 25/72, G01K 13/08, G01B 11/24, G01J 5/00, G01B 11/28

(54) **Method for inspecting a gear contact pattern of a gearbox in a steam turbine, and corresponding steam turbine system**
Verfahren zur Prüfung eines Tragbildes von Zahnrädern in einem Getriebe einer Dampfturbine sowie entsprechendes Dampfturbinensystem
Procédé d'inspection d'une surface de contact dans un engrenage de turbine à vapeur et système de turbine à vapeur correspondant.

(43) Date of publication of application: 08.06.2011
(73) Proprietor: Siemens Aktiengesellschaft, 80333 München (DE)
(72) Inventor: Hill, Petr, 682 01 Vyskov (CZ)

(56) References cited:
- DE-A1- 3 638 726
- DE-A1-102006 013 907
- DE-A1-102007 039 702
- JP-A- 3 134 550
- JP-A- 2005 221 347
- US-A- 5 083 458
- US-A- 6 148 098
- US-A1- 2006 090 340
- US-A1- 2007 058 854

## Description

### Background of the Invention

### Field of the Invention

The present invention relates to a method for inspecting a gear contact pattern between teeth surfaces of mutually engaging gear teeth in a pair of gears rotatably mounted in a housing of a gearbox in a steam turbine system. Further, the invention relates to a steam turbine system having a gearbox comprising means for allowing an inspection of a gear contact pattern.

Such inspection is particularly demanded for high torque precision gearboxes having a power rating of 10 MW or more used as a reduction transmission between an industrial steam turbine and an electric generator driven by the turbine.

The customary way for establishing an uniform tooth contact across the teeth surfaces is to adjust bearings that rotatably support the gears (or axes) of the at least one pair of gears. However, inevitably misalignment can occur under load (operation) of the gears. Therefore, from time to time, it is necessary to inspect the loaded running gear contact pattern, and as the case may be, to make adjustments in the bearings in order to re-establish a desired gear contact pattern.

### Description of the Prior Art

The document US 5,083,458 discloses a method for inspecting a gear contact pattern by means of providing a video imaging probe, and moving that probe along the length of a tooth while directing the probe at the respective tooth surface. This known method necessitates that the gear has previously been coated with a substance providing a visual indication of tooth wear (e.g. a formulation being known as "Red Dykem DX-296") and run under load for some time. Then, the operation has to be stopped to enable a platform supporting the video imaging probe to be placed on a selected tooth and to be moved along the tooth. Thus, the method is very time consuming and may involve considerable costs due to the outage of the respective system (e.g. gearbox) during the inspection.

DE 36 38 726 A1 discloses a thermographic inspection method within quality management in a fabrication process of gears, whereby the gear contact pattern is inspected while the pair of gears alone is placed in a dedicated testing machine.

DE 10 2007 039702 A1 relates to an inspection method of gears in operation, whereby the temperature difference between the environment of a gear and a gear placed in a gearbox is determined.

DE 10 2006 013907 A1 discloses a method to assess the temperature via temperature sensors at the surface of gears in motor vehicles in order to alarm the driver of a motor vehicle if necessary.

Reference is also made to JP 2005 221347 A, JP 3 134550 A, US 2006/090340 A1, US 6 148 098 A, which disclose inspection methods and devices in relation with gears.

### Summary of the Invention

It is an object of the present invention, to create the possibility of inspecting a gear contact pattern in a steam turbine system, wherein the inspection can be carried out easily and more rapid than the known inspection procedure.

According to a first aspect of the present invention, the above object is solved by a method as claimed in claim 1 .

The obtained temperature distribution across the respective tooth surface contains information about the distribution of mechanical load in the previous operation and thus represents a "gear contact pattern". Advantageously, the pattern obtained in the invention is even more detailed than the known pattern resulting from an abrasive wear of a previously coated chemical substance.

It is not necessary to provide any pre-treatment of the tooth surface to be inspected, as for example previously coating the surface with a substance. Therefore, the inventive method is also less time consuming than the prior art methods.

The inventive method is carried out in operation of the gears, e.g. in normal operation of a system that contains the gears to be inspected in a gearbox. Advantageously, neither an outage nor reducing of rotational speed of the gears is necessary to conduct the inspection method.

When the detecting means used for detecting the temperature distribution shows a relatively large response time (with respect to a timely succession of teeth surfaces appearing in front of the detecting means), as a thermocamera, the inspection provides a gear contact pattern averaged over time or the plurality of teeth surfaces, respectively.

In an alternative embodiment, the driving of the pair of gears is slowed down or stopped before the temperature distribution is detected.

A slowing down of the gear operation enhances the accuracy in detecting the temperature distribution on each of the respective teeth surfaces. The same applies if the operation is stopped before the detection of the temperature distribution is carried out.

In an embodiment of stopping the driving of the pair of gears, this stopping is provided in a predetermined rotational position of the gear having the tooth surface that is to be inspected. Such predetermined rotational position provides well-defined conditions for the inspection. In this way, it is possible to successively inspect the gear contact patterns on a plurality of teeth surfaces, e.g. on teeth surfaces of all teeth of a respective gear, tooth by tooth.

In an embodiment, the pair of gears is rotated in stepped fashion in course of the inspection of a plurality of gear contact patterns. A single gear contact pattern is achieved by the detection of the temperature distribution of a particular tooth surface while the gears are stopped. Then, the gears are rotated as long as a next tooth surface to be inspected reaches the predetermined angular position. Then, the detection of the temperature distribution is carried out again. In this manner, a plurality of different teeth surfaces of the same gear can be expected in sequence.

There exist a variety of possibilities to realize the necessary detection of a spatially resolved temperature distribution on the respective surface. For example, this can be done by means of any kind of temperature gauge, preferably a gauge allowing telemetric local temperature measurement or temperature monitoring. Such gauge may be a semiconductor device or alike, in particular an instrument detecting or sensitive to thermal radiation emitted from the tooth surface.

In the present invention, the detection of the temperature distribution is accomplished by means of a thermal radiation detector that is scanned across the tooth surface for obtaining spatial resolution.

The detection of the temperature distribution is accomplished by means of a thermal radiation detector that enables to simultaneously detect the thermal radiation of the whole tooth surface in a spatially resolved manner. Such a detecting means enables an even more simple and rapid detection of the temperature distribution.

The detection of the temperature distribution is accomplished by means of a thermocamera. The thermocamera may be implemented as a conventional CCD (charge coupled device), e.g. sensitive in the range of FIR (far infrared) and/or adjacent spectral region(s).

The thermocamera is fixedly positioned relative to the rotational axes of the gear bearing the tooth surface or teeth surfaces that are to inspect.

The inventive method further comprises the step of automatically analyzing the detected temperature distribution, e.g. accomplished by means of a (programmable) computing device.

According to a second aspect of the present invention, the above object is solved by a steam turbine system having a gearbox as claimed in claim 4.

By means of the detecting means, which may be integrated in different ways, it is advantageously possible to inspect a gear contact pattern on teeth surfaces of one or more gears constituting a gear transmission in the gearbox. In the invention, the gearbox is a torque transmission device in a steam turbine system, e.g. an industrial steam turbine facility, and used to transfer mechanical output power from a steam turbine to a power machine (electric generator, pump, compressor etc.) of the system.

In particular, the gearbox can be designed with a power rating (e.g. nominal power rating or maximum power rating) of at least 10 MW, or even 20 MW or more.

In an embodiment, the respective gears are designed as so-called single helical or double helical gears.

The gearbox and/or components belonging to a larger system comprising the gearbox is designed to allow the above-described embodiments and developments of the inspecting method. For example, one or more electronic control units controlling the operation of the system including the detecting means for detecting the temperature distribution can provide the slowing down or stopping of the gear driving before the temperature distribution is detected.

The detecting means comprise a thermocamera, wherein the thermocamera is fixedly (but e.g. easily replaceable) mounted on a camera mounting portion of the gearbox housing.

The camera mounting portion is an inwardly recessed portion of the gearbox housing so that the thermocamera or another thermal radiation sensitive device can be placed closer to the gear(s) to be inspected.

### Brief Description of the Drawings

The invention will now be described in more detail by way of example embodiments with reference to the accompanying drawings, in which
- Fig. 1: is a schematic view of a meshing gear pair in a gearbox of conventional type,
- Fig. 2: shows an exemplary gear contact pattern visualized in conventional manner on a tooth surface of one of the gears in Fig. 1,
- Fig. 3: is a schematic view of a meshing gear pair in a gearbox according to an embodiment of the invention, and
- Fig. 4: shows an exemplary gear contact pattern detected according to the invention on a tooth surface of one of the gears in Fig. 3.

### Description of the Preferred Embodiment(s)

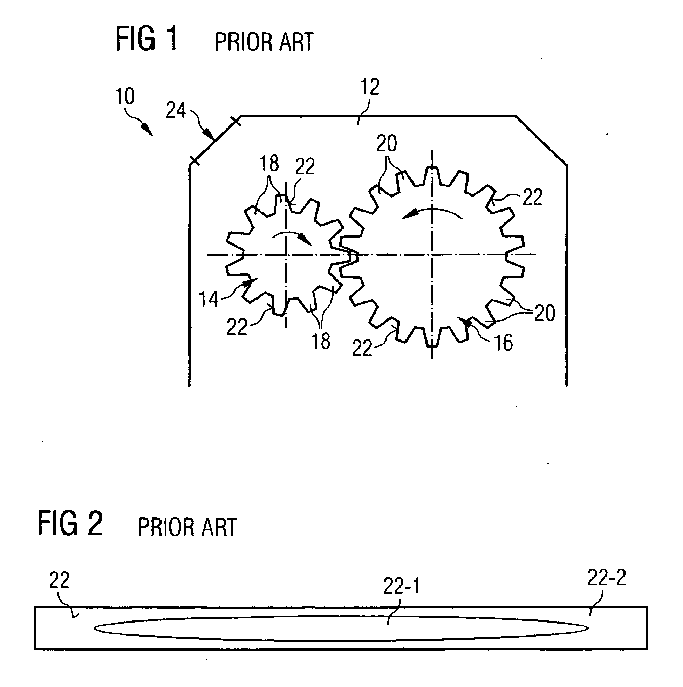

Fig. 1 illustrates a conventional gearbox 10, comprising a gearbox housing 12 and a pair of meshing gears 14, 16 rotatably mounted on respective coaxial shafts (not shown).

The gear 14 has gear teeth 18, and the gear 16 has gear teeth 20, wherein the gear teeth 18, 20 are mutually engaging so that in operation of the gearbox 10 a driving of the pair of gears 14, 16 takes place with clockwise and anti-clockwise rotation of the gears 14, 16 as indicated by arrows in Fig. 1.

In operation, the gears 14, 16 are subject to wear. To minimize such wear over lifetime, it is crucial to exactly adjust the bearings of the gear shafts in order to achieve a "gear contact pattern" across the individual teeth surfaces of the mutually engaging gear teeth 18, 20 as uniform as possible.

In particular for high power transmission chains implemented by such gearbox 10, it is necessary to inspect the loaded running gear contact pattern, and as the case may be, to re-establish uniform contact across the respective teeth surfaces by re-adjustment of the shaft bearings.

Such an inspection is conventionally accomplished by coating a least one of the teeth surfaces with a test lacquer, e.g. with a thickness of about 10 µm on three adjacent teeth. Then, after driving the pair of gears 14, 16 for some time, the test lacquer is removed (worn away) from the teeth surfaces at a portion of each tooth surface representing a loaded contact area.

Fig. 2 illustrates the resulting gear contact pattern on a tooth surface 22 showing a contact area 22-1 and a noncontact area 22-2. After having stopped the operation of the gearbox 10, this gear contact pattern can be visually expected through an inspection window 24 of the gearbox housing 12.

In the following description of an inventive gearbox, the same reference numbers are used for components acting in a similar manner, supplemented by the lowercase letter "a", however, to differentiate the form of embodiment. Here essentially only the differences from the example of embodiment already described with reference to Figs. 1 and 2 are explained, and otherwise reference is expressly made to the description of the previous example of embodiment.

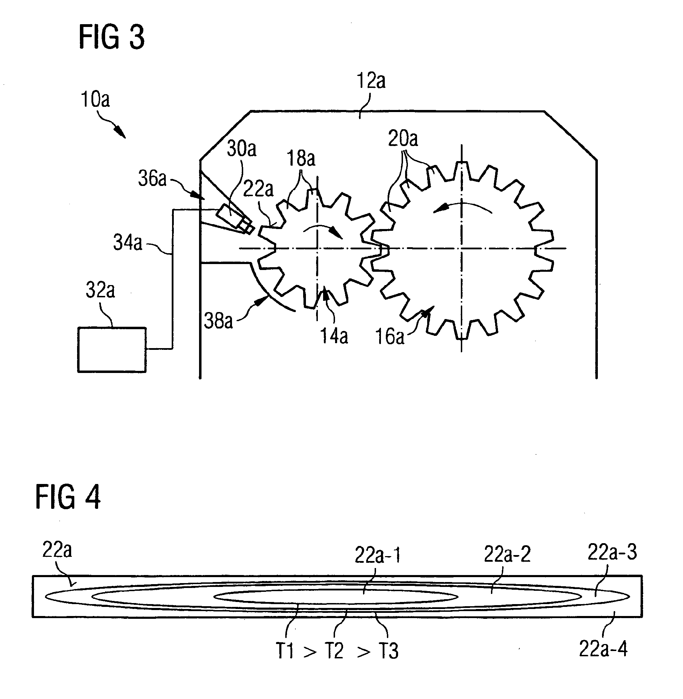

Fig. 3 shows a gearbox 10a, comprising a gearbox housing 12a and a pair of gears 14a, 16a constituting a pair of gears having mutually engaging gear teeth 18a and 20a, respectively.

As in the previous example, a gear contact pattern can be inspected after the pair of gears 14a, 16a have been driven (operated) for some time. The method for inspecting the gear contact pattern between teeth surfaces 22a of mutually engaging gear teeth 18a, 20a in the pair of gears 14a, 16a is implemented by means of a thermocamera 30a for detecting a spatially resolved temperature distribution on at least one of teeth surfaces 22a (see Fig. 4) of the gear teeth 18a and the gear teeth 20a.

In the shown example, the thermocamera 30a is directed for inspecting the gear contact pattern only on teeth surfaces 22a of the gear 14a.

By means of the thermocamera 30a, a gear contact pattern as illustrated in Fig. 4 can be obtained, analyzed and evaluated in a simple manner.

Fig. 4 shows an exemplary gear contact pattern represented by a particular temperature distribution on the respective tooth surface 22a subsequent to a loaded running of the pair of gears 14a, 16a. The thermocamera 30a detects a heat radiation image as shown in Fig. 4, having areas 22a-1 to 22a-4 of different temperatures. The highest temperatures exist in the area 22a-1 (temperatures greater than a temperature T1). In the areas 22a-2 to 22a-4, the temperature is gradually decreasing.

In the illustration of Fig. 4, lines having the same temperature value T1, T2 or T3 (wherein T1 > T2 > T3) are shown. For example, the temperature in the area 22-3 is in the range from T3 to T2. In the area 22a-4, the temperature is less than T3.

Such an visualization of the spatially resolved temperature distribution showing lines of equal temperature (e.g. T1 to T3 as used in this example) is accomplished by means of an electronic analyzing device 32a, for example a computer running suitable analyzing software, which is connected to the thermocamera 30a via a wiring 34a. Alternatively, a wireless connection between the thermocamera 30a and the analyzing device 32a is also possible.

The analyzing device 32a is also connected to a control unit, or implements that control unit for controlling the operation of the gearbox 10a. Such control unit may represent a control device for controlling and monitoring the operation of an industrial steam turbine facility comprising the gearbox 10a for torque transmission from an output shaft of a turbine to an input shaft of e.g. an electric generator.

In some applications, for example if the environment of the pair of gears 14a, 16a contains oil mist or another medium influencing the propagation of thermal radiation, the used radiation detector (thermocamera 30a) can be placed in proximity of the gear(s) to be inspected.

Therefore, as shown in Fig. 3, the thermocamera 30a is fixedly positioned on a camera mounting portion 36a in the form of an inwardly projecting recess of the gearbox housing 12a.

To further reduce the influence of possible oil mist in the detection procedure, an oil mist guard 38a is provided running along a circumferencial portion of the gear 14a.

In an preferred embodiment, the thermocamera 30a is operated during normal operation of the gearbox 10a for providing an averaged gear contact pattern without outage of the gearbox 10a and the system or facility that comprises the gearbox 10a. Alternatively, the driving speed of the gearbox 10a may be slowed down to enable a tooth-by-tooth detection.

In summary, the above-described inspection method and system allow a simple inspection and evaluation of gear contact patterns. Advantageously, the invention does not necessitate a complex and costly inspection procedure. The new solution reduces outages of the respective technical system for gear contact pattern control or monitoring in a steam turbine system.

## Claims

1. A method for inspecting a gear contact pattern between teeth surfaces (22a) of mutually engaging gear teeth (18a, 20a) in a pair of gears (14a, 16a) rotatably mounted in a gearbox housing (12a) of a gearbox (10a) in a steam turbine system, during operation of the steam turbine system, wherein the gearbox (10a) forms a torque transmission device for transferring mechanical output power of a steam turbine to a power machine, comprising the steps of:
- driving the pair of gears (14a, 16a) for at least a predetermined time by the operation of the steam turbine system,
- detecting a spatially resolved temperature distribution on at least one of the teeth surfaces (22a) by means of a thermocamera (30a) mounted on a camera mounting portion forming an inwardly recessed portion of the gearbox housing (12a) of the gearbox (10a), and
- automatically analyzing the detected temperature distribution by means of an analyzing device (32a) connected to or implementing a control device for controlling the operation of the steam turbine system.

2. The method according to claim 1, wherein the detection of the temperature distribution is conducted during normal operation of the gearbox (10a) for providing an averaged gear contact pattern.

3. The method according to claim 1, wherein the driving of the pair of gears (14a, 16a), in comparison to a normal operation of the gearbox (10a), is slowed down before the temperature distribution is detected.

4. A steam turbine system having a gearbox (10a), wherein the gearbox (10a) forms a torque transmission device for transferring mechanical output power of a steam turbine to a power machine and comprises
- a gearbox housing (12a),
- at least one pair of gears (14a, 16a) having mutually engaging gear teeth (18a, 20a), wherein each of the gears is rotatably mounted in the gearbox housing (12a) to allow driving the pair of gears in an operation of the gearbox(10a),
- a thermocamera (30a) mounted on a camera mounting portion (36a) forming an inwardly recessed portion of the gearbox housing (12a) for detecting a spatially resolved temperature distribution on at least one of teeth surfaces (22a) of the gear teeth (18a, 20a) during operation of the steam turbine system, and
- an analyzing device (32a) connected to or implementing a control device for controlling the operation of the steam turbine system, for automatically analyzing the detected temperature distribution.

5. The steam turbine system according to claim 4, wherein an oil mist guard (38a) is provided running along a circumferential portion of one (14a) of the gears (14a, 16a).

## Patentansprüche

1. Verfahren zum Prüfen eines Tragbildes zwischen Zahnflanken (22a) von ineinandergreifenden Zahnradzähnen (18a, 20a) bei einem Paar Zahnräder (14a, 16a), die drehbar in einem Getriebegehäuse (12a) eines Getriebes (10a) in einem Dampfturbinensystem angebracht sind, während des Betriebs des Dampfturbinensystems, wobei das Getriebe (10a) eine Drehmomentübertragungseinrichtung zum Übertragen mechanischer Ausgangsleistung einer Dampfturbine auf eine Kraftmaschine bildet, welches folgende Schritte umfasst:
- Antreiben des Zahnradpaars (14a, 16a) durch den Betrieb des Dampfturbinensystems zumindest für eine vorgegebene Zeit,
- Erkennen einer räumlich aufgelösten Temperaturverteilung auf mindestens einer der Zahnflanken (22a) mit Hilfe einer Wärmebildkamera (30a), die an einem Kameraanbringabschnitt angebracht ist, der einen nach innen hin vertieften Abschnitt des Getriebegehäuses (12a) des Getriebes (10a) bildet, und
- automatisches Analysieren der erkannten Temperaturverteilung mit Hilfe einer Analysiereinrichtung (32a), die mit einer Steuereinrichtung zum Steuern des Betriebs des Dampfturbinensystems verbunden ist oder diese implementiert.

2. Verfahren nach Anspruch 1, bei dem das Erkennen der Temperaturverteilung zwecks Bereitstellen eines gemittelten Tragbildes während des normalen Betriebs des Getriebes (10a) erfolgt.

3. Verfahren nach Anspruch 1, bei dem das Antreiben des Zahnradpaars (14a, 16a) im Vergleich zum normalen Betrieb des Getriebes (10a) vor dem Erkennen der Temperaturverteilung verlangsamt wird.

4. Dampfturbinensystem mit einem Getriebe (10a), bei dem das Getriebe (10a) eine Drehmomentübertragungseinrichtung zum Übertragen mechanischer Ausgangsleistung einer Dampfturbine auf eine Kraftmaschine bildet und Folgendes umfasst:
- ein Getriebegehäuse (12a),
- mindestens ein Zahnradpaar (14a, 16a) mit ineinandergreifenden Zahnradzähnen (18a, 20a), wobei jedes der Zahnräder drehbar in dem Getriebegehäuse (12a) angebracht ist, um ein Antreiben des Zahnradpaars beim Betrieb des Getriebes (10a) zu ermöglichen,
- eine Wärmebildkamera (30a), die an einem Kameraanbringabschnitt (36a) angebracht ist, der einen nach innen hin vertieften Abschnitt des Getriebegehäuses (12a) bildet, zum Erkennen einer räumlich aufgelösten Temperaturverteilung auf mindestens einer der Zahnflanken (22a) der Zahnradzähne (18a, 20a) während des Betriebs des Dampfturbinensystems, und
- eine Analysiereinrichtung (32a), die mit einer Steuereinrichtung zum Steuern des Betriebs des Dampfturbinensystems verbunden ist oder diese implementiert, zum automatischen Analysieren der erkannten Temperaturverteilung.

5. Dampfturbinensystem nach Anspruch 4, bei dem an einem Umfangsabschnitt eines (14a) der Zahnräder (14a, 16a) ein Ölnebelschutz (38a) entlang verläuft.

## Revendications

1. Procédé d'inspection d'une surface de contact entre des surfaces dentées (22a) de dents d'engrenage (18a, 20a) en engagement mutuel dans une paire d'engrenages (14a, 16a) montés de manière à effectuer une rotation dans un carter (12a) d'une boîte à engrenages (10a) dans un système de turbine à vapeur, pendant le fonctionnement du système de turbine à vapeur, dans lequel la boîte à engrenages (10a) forme un dispositif de transmission de couple afin de transférer une puissance en sortie mécanique d'une turbine à vapeur à une machine électrique, comprenant les étapes :
- entraînement de la paire d'engrenages (14a, 16a) pendant au moins une durée prédéterminée par le fonctionnement du système de turbine à vapeur,
- détection d'une répartition de température à résolution spatiale sur au moins l'une des surfaces dentées (22a) au moyen d'une caméra thermique (30a) montée sur une partie de montage de caméra formant une partie, évidée vers l'intérieur, du carter (12a) de la boîte à engrenages (10a), et
- analyse automatique de la répartition de température détectée au moyen d'un dispositif d'analyse (32a) connecté à ou mettant en oeuvre un dispositif de commande afin de commander le fonctionnement du système de turbine à vapeur.

2. Procédé selon la revendication 1, dans lequel la détection de la répartition de température est menée au cours du fonctionnement normal de la boîte à engrenages (10a) afin de fournir une moyenne de la surface de contact.

3. Procédé selon la revendication 1, dans lequel l'entraînement de la paire d'engrenages (14a, 16a), en comparaison avec un fonctionnement normal de la boîte à engrenages (10a), est ralenti avant que la répartition de température soit détectée.

4. Système de turbine à vapeur comportant une boîte à engrenages (10a), dans lequel la boîte à engrenages (10a) forme un dispositif de transmission de couple afin de transférer une puissance en sortie mécanique d'une turbine à vapeur à une machine électrique et comprend
- un carter (12a),
- au moins une paire d'engrenages (14a, 16a) ayant des dents d'engrenage (18a, 20a) en engagement mutuel, chacun des engrenages étant monté de manière à effectuer une rotation dans le carter (12a) afin de permettre l'entraînement de la paire d'engrenages dans un fonctionnement de la boîte à engrenages (10a),
- une caméra thermique (30a) montée sur une partie de montage de caméra (36a) formant une partie, évidée vers l'intérieur, du carter (12a) afin de détecter une répartition de température à résolution spatiale sur au moins l'une des surfaces dentées (22a) des dents d'engrenage (18a, 20a) au cours du fonctionnement du système de turbine à vapeur, et
- un dispositif d'analyse (32a) connecté à ou mettant en oeuvre un dispositif de commande afin de commander le fonctionnement du système de turbine à vapeur, en vue d'analyser automatiquement la répartition de température détectée.

5. Système de turbine à vapeur selon la revendication 4, dans lequel un dispositif protecteur contre les nuages d'huile (38a) est prévu le long d'une partie circonférentielle de l'un (14a) des engrenages (14a, 16a).
